(19) Europäisches Patentamt
European Patent Office
Office européen des brevets

(11) **EP 2 075 904 A1**

(12) **EUROPEAN PATENT APPLICATION**
published in accordance with Art. 153(4) EPC

(43) Date of publication:
**01.07.2009 Bulletin 2009/27**

(51) Int Cl.:
*H02P 6/18* (2006.01)    *H02P 6/10* (2006.01)
*H02P 21/00* (2006.01)    *H02P 27/04* (2006.01)

(21) Application number: **07745161.5**

(22) Date of filing: **13.06.2007**

(86) International application number:
**PCT/JP2007/061894**

(87) International publication number:
**WO 2008/004417 (10.01.2008 Gazette 2008/02)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **05.07.2006 JP 2006185552**

(71) Applicant: **Kabushiki Kaisha Toshiba
Minato-ku
Tokyo 105-8001 (JP)**

(72) Inventor: **YASUI, Kazuya c/o Intellectual prop.
division
Minato-ku, Tokyo (JP)**

(74) Representative: **HOFFMANN EITLE
Patent- und Rechtsanwälte
Arabellastraße 4
81925 München (DE)**

(54) **SENSORLESS CONTROL APPARATUS OF SYNCHRONOUS MACHINE**

(57)    A sensorless control apparatus of a rotary machine includes an inverter 05 to invert DC power and AC power from one to another, a permanent-magnet synchronous machine 07 whose rotor has magnetic saliency and which receives power from the inverter and is driven thereby, a PWM modulate means 04 to determine an output voltage of the inverter according to a command for controlling the permanent-magnet synchronous machine, a current detect means 06 to detect a current passed to the permanent-magnet synchronous machine, a high-frequency component calculate means 10 to calculate high-frequency components of current changes caused by voltages that have been determined by the PWM modulate means and have been output from the inverter, and a rotational phase angle estimate means 08 to estimate a rotational phase angle of the permanent-magnet synchronous machine according to a spatial distribution of the high-frequency components on rotating coordinate axes synchronized with the rotation of the permanent-magnet synchronous machine. The apparatus is capable of suppressing an increase in loss and noise caused by the sensorless control of the rotary machine and stably operating with simple adjustments.

FIG. 3

## Description

TECHNICAL FIELD

The present invention relates to a sensorless control apparatus of a synchronous machine.

BACKGROUND ART

Controlling and driving a synchronous machine (such as a motor and a generator) employing a permanent magnet as a rotor needs a sensor to detect a rotational phase angle of the rotor. A control apparatus that controls a synchronous machine with the use of the sensor to detect a rotational phase angle has the following problems.

First, the presence of the sensor to detect a rotational phase angle increases the total volume of a drive system. This prevents the output of the synchronous machine from being intensified in a limited installation space.

Second, the sensor to detect a rotational phase angle needs itself a maintenance checkup. This deteriorates the efficiency of an overall maintenance checkup.

Third, a signal line from the sensor to detect a rotational phase angle may pick up noise and the like, and therefore, a detected value may include a disturbance to deteriorate controllability.

Fourth, the sensor to detect a rotational phase angle generally needs a power source to drive the same. Such a power source must be installed separately from a system for driving the synchronous machine. This results in increasing a power source installation space, power supply lines, costs, and the like.

These are the reasons for developing a control system that estimates a rotational phase angle without the sensor, and according to the estimated rotational phase angle, controls a synchronous machine. This is called "sensorless control."

A sensorless control apparatus that effectively controls a synchronous machine without a sensor in a stopped or low-speed state in particular is described in Japanese Patent Publication No. 3168967. This related art is a system for driving a synchronous machine with a PWM inverter. The system superposes a high-frequency voltage command, which involves a frequency sufficiently higher than an operating frequency of the synchronous machine, on a command to control the inverter, produces high-frequency current responses accordingly, detects from the responses components corresponding to the superposed high-frequency command, processes the detected components to provide a rotational phase angle error, and estimates a rotational phase angle according to the error.

The sensorless control apparatus of a synchronous machine according to the related art mentioned above has advantages that it can control the synchronous machine without a rotational phase angle sensor and can improve maintenance performance at low cost. However, the sensorless control apparatus described in the above-mentioned patent document that detects components corresponding to a high-frequency voltage command from high-frequency current responses must basically pass required high-frequency currents. Compared with a control apparatus employing a rotational phase angle sensor, the related art has a problem of dramatically increasing loss and noise. Further, to stably estimate a rotational phase angle, the related art must precisely adjust the amplitude, frequency, and superposing method of a high-frequency command to be superposed. Namely, to combine the control apparatus with a motor and stably operate the combination in practice, the related art actually needs time-consuming, complicated adjustments. More precisely, if a motor windings saturate, an inductance will change to change the characteristics of the motor, so that the high-frequency superposing method and high-frequency current detecting method must be modified or finely adjusted according to a torque current of the motor.

DISCLOSURE OF INVENTION

The present invention has been made to solve the problems of the above-mentioned related art and intends to provide a sensorless control apparatus of a synchronous machine, capable of suppressing an increase in loss and noise due to sensorless control and stably operating with simple adjustments.

The present invention is characterized by a sensorless control apparatus of a synchronous machine, comprising an inverter to invert DC power and AC power from one to another; the synchronous machine whose rotor has magnetic saliencies and which receive power from the inverter and are driven thereby; a PWM modulate means to determine an output voltage of the inverter according to a command for controlling the synchronous machine; a current detect means to detect a current passed to the synchronous machine; a high-frequency component calculate means to calculate high-frequency components of current changes caused by voltages that have been determined by the PWM modulate means and have been output from the inverter; and a rotational phase angle estimate means to estimate a rotational phase angle of the synchronous machine according to a spatial distribution of the high-frequency components on rotating coordinate axes synchronized with the rotation of the synchronous machine.

The sensorless control apparatus of a synchronous machine according to the present invention calculates high-frequency components of changes in currents passed to the synchronous machine, estimates without a rotational phase angle sensor a phase angle of the motor rotor according to a spatial distribution of the high-frequency components on a dq-axes coordinate system synchronized with the rotation of the synchronous machine, and controls the synchronous machine accordingly. The apparatus, therefore, can suppress an increase in the loss and noise of the synchronous machine caused by sensorless control and can stably operate with simple adjustments.

BRIEF DESCRIPTION OF DRAWINGS

[Fig. 1] Figure 1 is a block diagram showing a model of a standard permanent-magnet synchronous machine and definitions of coordinates.
[Fig. 2] Figure 2 is a block diagram showing definitions of voltage vectors of the above-mentioned permanent-magnet synchronous machine.
[Fig. 3] Figure 3 is a block diagram showing a sensorless control apparatus of a synchronous machine, according to a first embodiment of the present invention.
[Fig. 4] Figure 4 is a graph showing a distribution of high-frequency components of current changes on dq coordinate axes of a permanent-magnet synchronous machine.
[Fig. 5] Figure 5 is a graph showing a distribution of high-frequency components of current changes with an error of -30° on dq coordinate axes of a permanent-magnet synchronous machine.
[Fig. 6] Figure 6 is a graph showing a distribution of high-frequency components of current changes with an error of 0° at torque output of 100% on dq coordinate axes of a permanent-magnet synchronous machine.
[Fig. 7] Figure 7 is a graph showing a distribution of high-frequency components of current changes with an error of -30° at torque output of 100% on dq coordinate axes of a permanent-magnet synchronous machine.
[Fig. 8] Figure 8 is a graph showing a distribution of high-frequency components of current changes with an error of +30° at torque output of 100% on dq coordinate axes of a permanent-magnet synchronous machine.
[Fig. 9] Figure 9 is a graph showing a relationship between feature values and errors concerning a sensorless control apparatus of a synchronous machine, according to a third embodiment of the present invention.
[Fig. 10] Figure 10 is a block diagram showing a sensorless control apparatus of a synchronous machine, according to a fourth embodiment of the present invention.

BEST MODE FOR CARRYING OUT THE INVENTION

Embodiments of the present invention will be explained in detail with reference to the drawings.

(First embodiment)

A sensorless control apparatus of a synchronous machine according to the present invention calculates high-frequency components of changes in currents passing through the permanent-magnet synchronous machine, estimates a phase angle of a motor rotor without a rotational phase angle sensor according to a spatial distribution of the high-frequency components on a dq-axes coordinate system synchronized with the rotation of the synchronous machine, and controls the permanent-magnet synchronous machine accordingly.

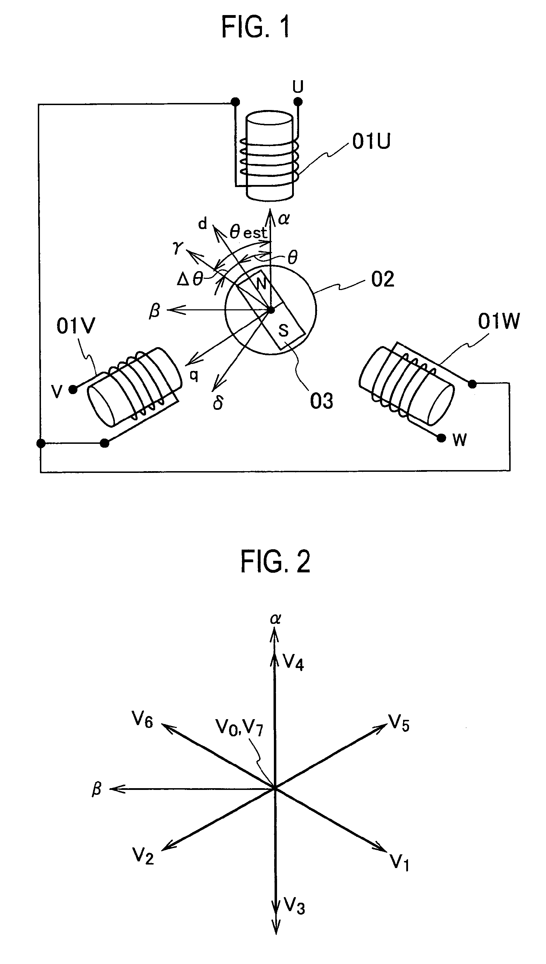

Figure 1 shows a configuration of a standard permanent-magnet synchronous machine. A stator 01 of the permanent-magnet synchronous machine consists of three-phase windings 01U, 01V, and 01W and a rotor thereof consists of a rotor iron core 02 and a permanent magnet 03.
In a sensorless control apparatus of a synchronous machine according to the embodiment, a coordinate system that turns in synchronization with the rotation of the permanent-magnet synchronous machine is defined with a d-axis oriented in the direction of magnetic flux of the permanent magnet and a q-axis orthogonal to the d-axis. An α-axis is defined in the direction of the U-phase winding and a β-axis is defined orthogonal to the α-axis. The α-axis direction serves as a reference and an angle from the α-axis direction to the d-axis direction is defined as a rotational phase angle θ of the synchronous machine. Based on these definitions, a voltage-current relationship of the permanent-magnet synchronous machine is expressed with Math. 1 as follows:

[Math. 1]

$$\begin{bmatrix} V_d \\ V_q \end{bmatrix} = \begin{bmatrix} R + pL_d & -\varpi L_q \\ \varpi L_d & R + pL_q \end{bmatrix} \begin{bmatrix} I_d \\ I_q \end{bmatrix} + \begin{bmatrix} 0 \\ \varpi \Phi \end{bmatrix}$$

Here, Vd is a d-axis voltage, Vq is a q-axis voltage, Id is a d-axis current, Iq is a q-axis current, R is a resistance, Ld is a d-axis inductance, Lq is a q-axis inductance, Φ is a permanent magnet flux, ω is a rotational velocity, and p is a differential operator.

The sensorless control apparatus of a synchronous machine according to the embodiment has no rotational phase angle sensor, and therefore, is unable to detect the rotational phase angle θ. Accordingly, a phase angle estimated by the control apparatus is used in place of a sensor output. In Fig. 1, the estimated phase angle is θest and is on a coordinate system defined with a γ-axis and a δ-axis. If an estimation error Δθ occurs, the γδ-axes are at positions turned by the estimation error Δθ from the dq-axes.

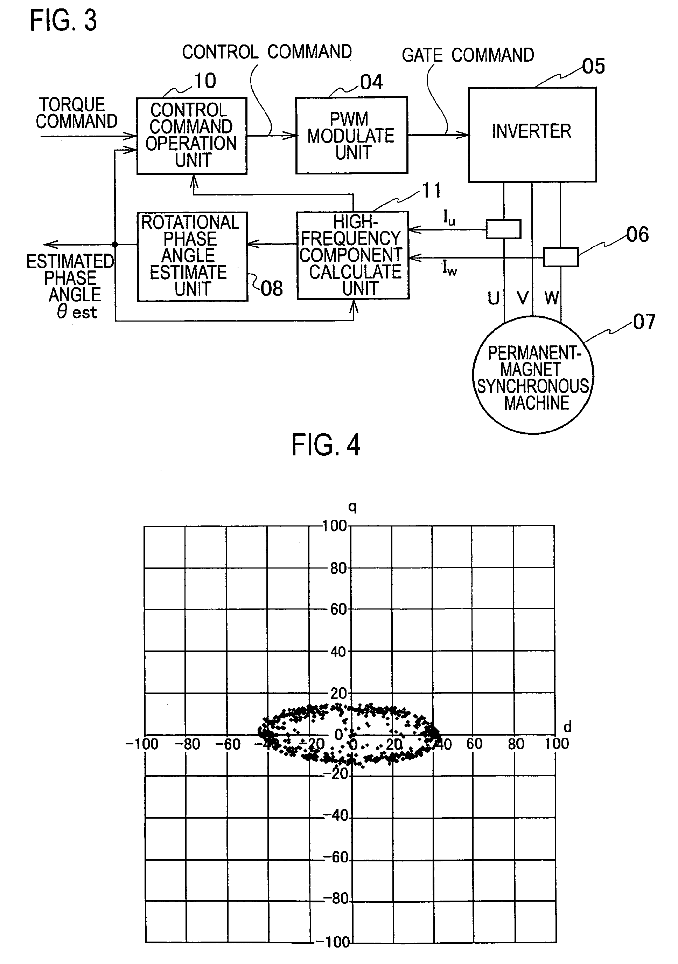

Figure 3 shows a configuration of the sensorless control apparatus of a synchronous machine according to the first embodiment of the present invention. An inverter 05 receives a gate command to drive the inverter 05, alternates ON/OFF of main circuit switching elements incorporated in the inverter 05, and inverts AC power and DC power from one to another. The permanent-magnet synchronous machine 07 generates magnetic fields due to three-phase AC currents passing through U, V, and W excitation phases, and generates torque by magnetic interaction with a rotor.

A control command operation unit 10 prepares a control command from a torque command according to an operation to be explained later and outputs the control command to a PWM modulate unit 04. The PWM modulate unit 04 modulates the control command to drive the permanent-magnet synchronous machine 07 by PWM (Pulse Width Modulation) and outputs a gate command, i.e., an ON/OFF command for a switching element of each phase of the inverter 05.

Current detect units 06 detect two or three phases of current response values among three-phase AC currents passing through the permanent-magnet synchronous machine 07. The embodiment is configured to detect two phase-currents Iu and Iw. A high-frequency component calculate unit 11 extracts high-frequency current components from response values of the input currents Iu and Iw, calculates temporal change rates thereof, and outputs the same and a signal indicating the timing of the calculation.

A rotational phase angle estimate unit 08 uses the high-frequency components of current changes calculated from the current response values Iu and Iw detected by the current detect units 06 and estimates a rotational phase angle θest of the permanent-magnet synchronous machine 07 according to a spatial distribution of the components on the γδ-axes coordinate system.

Next, operation of the sensorless control apparatus of a synchronous machine according to the embodiment having the above-mentioned configuration will be explained. In Fig. 3, a control command to the PWM modulate unit 04 is given by the control command operation unit 10 according to the below-mentioned operation and according to a torque command that specifies output of the permanent-magnet synchronous machine 07.

First, a torque command is provided by a higher control system, and based on the torque command, a γ-axis current command Iγref and a δ-axis current command Iδref are calculated according to Math. 2 as follows:

[Math. 2]

$$I_\gamma^{ref} = Trq^{ref} \cdot k \cdot \cos(\theta_i)$$
$$I_\delta^{ref} = Trq^{ref} \cdot k \cdot \sin(\theta_i)$$

Here, Trqref is the torque command, k is a constant, and θi is a current phase angle with the γ-axis being a reference on the γδ-axes coordinate system.

The current commands Iγref and Iδref may be obtained by looking up a table with the torque command serving as a parameter. The technique of looking up a table is effective when it is not preferable to formulate a relationship between torque and current like Math. 2.

Next, the current commands Iγref and Iδref obtained from the torque command and a γ-axis response value Iγres and δ-axis response value Iδres of currents passing through the permanent-magnet synchronous machine 07 are used to calculate a γ-axis voltage command Vγref and δ-axis voltage command Vδref according to the following proportional-integral control:

[Math. 3]

$$V_\gamma^{ref} = \left( K_p + K_i \cdot \frac{1}{s} \right) \cdot \left( I_\gamma^{ref} - I_\gamma^{res} \right)$$

$$V_\delta^{ref} = \left( K_p + K_i \cdot \frac{1}{s} \right) \cdot \left( I_\delta^{ref} - I_\delta^{res} \right)$$

Here, Kp is a proportional gain, Ki is an integral gain, and s is a Laplace operator.
Next, the γ-axis voltage command Vγref and δ-axis voltage command Vδref obtained as mentioned above are subjected to a coordinate conversion according to an estimated rotational phase angle θest from the rotational phase angle estimate unit 08, to provide three-phase voltage commands Vuref, Vvref, and Vwref as follows:

[Math. 4]

$$V_u^{ref} = \sqrt{\frac{2}{3}} \left\{ V_\gamma^{ref} \cos\left( \theta_{est} \right) - V_\delta^{ref} \sin\left( \theta_{est} \right) \right\}$$

$$V_v^{ref} = \sqrt{\frac{2}{3}} \left\{ V_\gamma^{ref} \cos\left( \theta_{est} - \frac{2}{3}\pi \right) - V_\delta^{ref} \sin\left( \theta_{est} - \frac{2}{3}\pi \right) \right\}$$

$$V_w^{ref} = \sqrt{\frac{2}{3}} \left\{ V_\gamma^{ref} \cos\left( \theta_{est} + \frac{2}{3}\pi \right) - V_\delta^{ref} \sin\left( \theta_{est} + \frac{2}{3}\pi \right) \right\}$$

The control command operation unit 10 provides the PWM modulate unit 04 with the three-phase voltage commands calculated as mentioned above as control commands.
The PWM modulate unit 04 conducts a PWM modulation and provides the inverter 05 with gate commands. Here, the PWM modulation is to compare the control commands, i.e., the three-phase voltage commands with a fixed- or variable-frequency triangular-wave carrier and provide the comparison results as the gate commands.
The rotational phase angle estimate unit 08 uses high-frequency components of changes in currents passing through the permanent-magnet synchronous machine 07 provided by the high-frequency component calculate unit 11 and estimates a rotational phase angle θest according to a spatial distribution of the high-frequency components on the γδ-axes coordinate system as mentioned below.
First, the high-frequency component calculate unit 11 conducts a coordinate conversion on phase currents Iu and Iw detected by the current detect units 06 according to the estimated rotational phase angle θest provided by the rotational phase angle estimate unit 08 as mentioned below, thereby providing a γ-axis current response value Iγres and a δ-axis current response value Iδres:

[Math. 5]

$$I_\gamma^{res} = \sqrt{\frac{2}{3}} \left\{ I_u^{res} \cos\left( \theta_{est} \right) + I_v^{res} \cos\left( \theta_{est} - \frac{2}{3}\pi \right) + I_w^{res} \cos\left( \theta_{est} + \frac{2}{3}\pi \right) \right\}$$

$$I_\delta^{res} = -\sqrt{\frac{2}{3}} \left\{ I_u^{res} \sin\left( \theta_{est} \right) + I_v^{res} \sin\left( \theta_{est} - \frac{2}{3}\pi \right) + I_w^{res} \sin\left( \theta_{est} + \frac{2}{3}\pi \right) \right\}$$

Here, the sum of three-phase currents passing through the permanent-magnet synchronous machine 07 is 0. With the use of this, the below-mentioned expression provides the γ-axis current response value Iγres and δ-axis current response value Iδres from the values of the two-phase currents among the three-phase currents. In this case, arranging the current detect units 06 for two phases is sufficient and is simpler than detecting three phases of currents.

[Math. 6]

$$I_\gamma^{res} = \sqrt{2}\left\{ I_u^{res} \sin\left(\theta_{est} + \frac{2}{3}\pi\right) - I_w^{res} \sin\left(\theta_{est}\right)\right\}$$

$$I_\delta^{res} = \sqrt{2}\left\{ I_u^{res} \cos\left(\theta_{est} + \frac{2}{3}\pi\right) - I_w^{res} \cos\left(\theta_{est}\right)\right\}$$

Next, high-frequency components of changes in the γ-and δ-axis current response values are obtained and output as follows:

[Math. 7]

$$\frac{dI_{hf}}{dt} = \frac{1}{t_m - t_n} \cdot \left\{ (I_m - I_n) - \frac{dI_{base}}{dt} \cdot (t_m - t_n) \right\}$$

Here, Im is an input current I at a time point tm, In is an input current I at a time point tn, and dIbase/dt is a temporal change rate of a basic wave component of the input current. The basic wave component is an electrical rotational frequency component.

Calculation of dIbase/dt is achievable by calculating the rate of change of an input current in a time interval that is sufficiently longer than (tm - tn), or by calculating the rate of change of a current command value. Although a rotational frequency component is not precisely obtained, the calculation is achievable without problems if "tm - tn" is set to be sufficiently shorter than the basic wave component calculation time interval.

A means to more precisely calculate the high-frequency components of current changes may be realized by linearly approximating a current change between the time points tm and tn, by finding a changed portion in this time interval, and by using the same as (Im - In) in Math. 7. The linear approximation may be a generally used least squares approximation. In this case, a plurality of sampling points are needed between the calculation time points tm and tn. The number of sampling points is dependent on the sampling frequency of an A/D converter. A standard A/D converter of recent years has a high sampling frequency, and therefore, it is possible to take a sufficient number of sampling points for linearly approximating a current change. Accordingly, this technique is sufficiently practical. In addition, this technique can eliminate the influence of noise, and therefore, can improve an estimation accuracy.

The rotational phase angle estimate unit 08 estimates a rotational phase angle according to a spatial distribution of the high-frequency components of current changes provided by the high-frequency component calculate unit 11. First, an estimate principle will be explained. The high-frequency components of changes in currents passing through the permanent-magnet synchronous machine 07 are obtained from the current differential term of Math. 2. Math. 2 is divided into a high-frequency component and a basic wave component as expressed with Math. 8 and the high-frequency component is extracted as expressed with Math. 9.

[Math. 8]

$$X = X_{base} + \tilde{X}$$

Here, Xbase is a basic wave component of a waveform X and X∼ is a high-frequency component of the waveform X.

[Math. 9]

$$\begin{bmatrix} \tilde{V}_d \\ \tilde{V}_q \end{bmatrix} = \begin{bmatrix} pL_d\tilde{I}_d \\ pL_q\tilde{I}_q \end{bmatrix}$$

High-frequency voltages V~d and V~q are defined as the sum of high-frequency components of inverter output voltages and the sum of high-frequency components of motor induced voltages. The motor induced voltages vary according to a rotational speed and drive currents and the high-frequency components thereof are very small. The high-frequency voltages concerning the spatial distribution of high-frequency components used by the rotational phase angle estimate unit 08 are dominated by the high-frequency components of the inverter output voltages. The high-frequency components of the inverter output voltages are determined by PWM output voltage vectors, and therefore, the amplitude values of the high-frequency voltages V~d and V~q are considered to be substantially constant. Accordingly, the high-frequency currents I~d and I~q form a constant distributions determined by V~d, V~q, Ld, and Lq as follows:

[Math. 10]

$$\begin{bmatrix} p\tilde{I}_d \\ p\tilde{I}_q \end{bmatrix} = \begin{bmatrix} \dfrac{\tilde{V}_d}{L_d} \\ \dfrac{\tilde{V}_q}{L_q} \end{bmatrix}$$

The inventor of this patent application spatially plotted high-frequency components of current changes on a dq-axes coordinate system of a permanent-magnet synchronous machine in development facilities used by the inventor and experimentally confirmed that a distribution of the spatially plotted high-frequency components is substantially an elliptic distribution as shown in Fig. 4. This verifies the principle of Math. 10. This distribution can be used to estimate a rotational phase angle.

As is apparent from Fig. 4, a spatial distribution of high-frequency components has a shape characterized by dq-axes directions. This distribution can be considered, from the structure of a motor, as an inductance distribution of stator windings that pass drive currents of the permanent-magnet synchronous machine 07. The stator inductance spatial distribution is strongly influenced by a rotor inductance, and in an operation of zero torque to medium torque in which the drive currents do not saturate the stator inductance, is substantially equal to the rotor inductance distribution. The inductance distribution shown in Fig. 4 is obtained by superposing spatially uniform high-frequency voltages under a zero output torque state, i.e., a zero current state. Due to the above-mentioned reasons, this distribution is considered to be a rotor inductance.

In Fig. 4, a long-axis direction of the elliptic distribution agrees with the d-axis and a short-axis direction thereof agrees with the q-axis. As mentioned above, the elliptic distribution rotates according to the rotation of the rotor. Accordingly, extracting the rotation of the ellipse from the distribution by approximation or the like enables an estimation of the direction of the d-axis. This technique enables a rotational phase angle estimation by obtaining necessary minimum high-frequency components to find the rotation of the elliptic distribution.

On the other hand, the related art must superpose a high-frequency voltage and must observe a high-frequency current amplitude and the like adjusted to the superposing frequency of the high-frequency voltage. According to this technique, a disturbance such as noise occurs at sampling timing to observe the high-frequency current amplitude, thereby greatly deteriorating the accuracy of an estimated phase angle. To avoid such a disadvantage, the related art increases a superposed high frequency amount to increase an S/N ratio, thus increasing a high-frequency current amplitude so that an estimated result is not affected by noise. This is not preferable because it increases loss and noise due to the high-frequency current.

The sensorless control apparatus of a synchronous machine according to the embodiment employs the above-mentioned phase angle estimate technique, and therefore, can freely select current sampling time points, without regard to voltages, within a range in which high-frequency components of current changes are correctly measurable. In addition, by calculating a current change by linear approximation, the embodiment can decrease the influence of noise. Consequently, the embodiment can zero a high-frequency superpose amount or decrease the same lower than that of the related art.

In this way, the sensorless control apparatus of a synchronous machine according to the embodiment can estimate a phase angle of a rotor without a rotational phase angle sensor. This sensorless configuration can reduce the size and cost of the apparatus and realize easy maintenance. Without drastically increasing loss and noise due to high-frequency currents, the apparatus of the embodiment is simply adjustable for stable operation.

(Second embodiment)

A sensorless control apparatus of a synchronous machine according to a second embodiment of the present invention will be explained. The configuration of this embodiment is the same as that of the first embodiment shown in Fig. 3. This embodiment differs from the first embodiment in an operation carried out by the rotational phase angle estimate unit 08. This embodiment is **characterized in that,** in a high torque output state in which currents pass to saturate the inductance of the permanent-magnet synchronous machine 07, the embodiment estimates a rotational phase angle according to a change in the shape of a spatial distribution of high-frequency components of current changes.

Estimation of a rotational phase angle carried out by the rotational phase angle estimate unit 08 according to the first embodiment uses that a spatial distribution of high-frequency components of current changes indicates a rotor inductance of the permanent-magnet synchronous machine 07 and this has a rotational correspondence to the dq-axes coordinate system that synchronously rotates. In this case, due to the characteristics of the permanent-magnet synchronous machine 07, drive currents under a high-torque output state may saturate a stator inductance to make it impossible to observe a rotational correspondence from the above-mentioned distribution.

According to the second embodiment, the rotational phase angle estimate unit 08 effectively estimates a rotational phase angle even in such a state. In particular, the unit 08 pays attention to the shape of the above-mentioned distribution and relates the shape of the spatial distribution to a phase angle estimation error, thereby estimating a rotational phase angle.

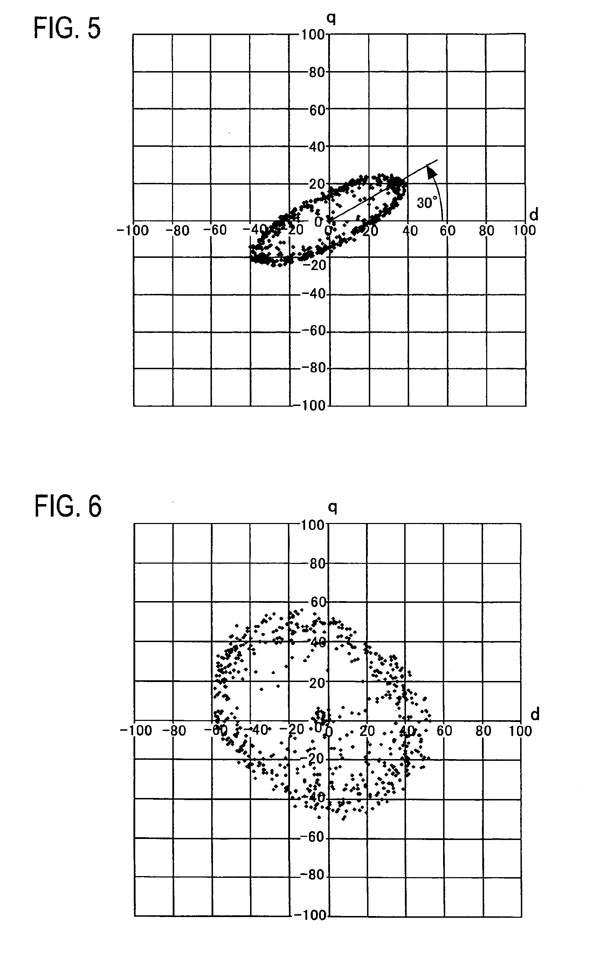

Operation of the sensorless control apparatus of a synchronous machine according to the second embodiment of the above-mentioned configuration will be explained. Figure 4 shows a high-frequency component distribution of current changes under a low-torque state. If an estimated phase angle θest includes an error Δθ, the high-frequency component distribution will be turned by -Δθ. Figure 5 shows a high-frequency component distribution intentionally provided with an error Δθ of -30°. From Fig. 5, a spatial correspondence is apparently seen between the dq-axes coordinate system and the high-frequency component distribution.

The rotational phase angle estimate technique adopted by the first embodiment utilizes such a characteristic to estimate a rotational phase angle. Some synchronous machine shows, in a high-torque operating state, an elliptic high-frequency component distribution shape that is not elliptic but close to a true circle as shown in Fig. 6. In this case, it is difficult to extract the above-mentioned correspondence to the dq-axes coordinate system and an estimation error will easily occur due to noise and the like. It is understood from Fig. 6 that a rotational relationship between an ellipse and the dq-axes varies depending on current phases and is not simple. Accordingly, a proper correction must be carried out depending on operating conditions.

Accordingly, the rotational phase angle estimate unit 08 of the second embodiment estimates a rotational phase angle with the use of the shape of a high-frequency component distribution instead of using a rotational relationship between a high-frequency component distribution and the dq-axes coordinate system.

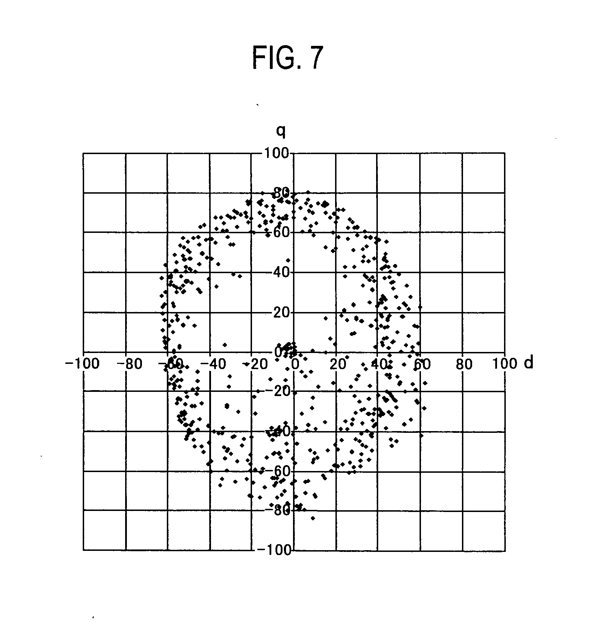

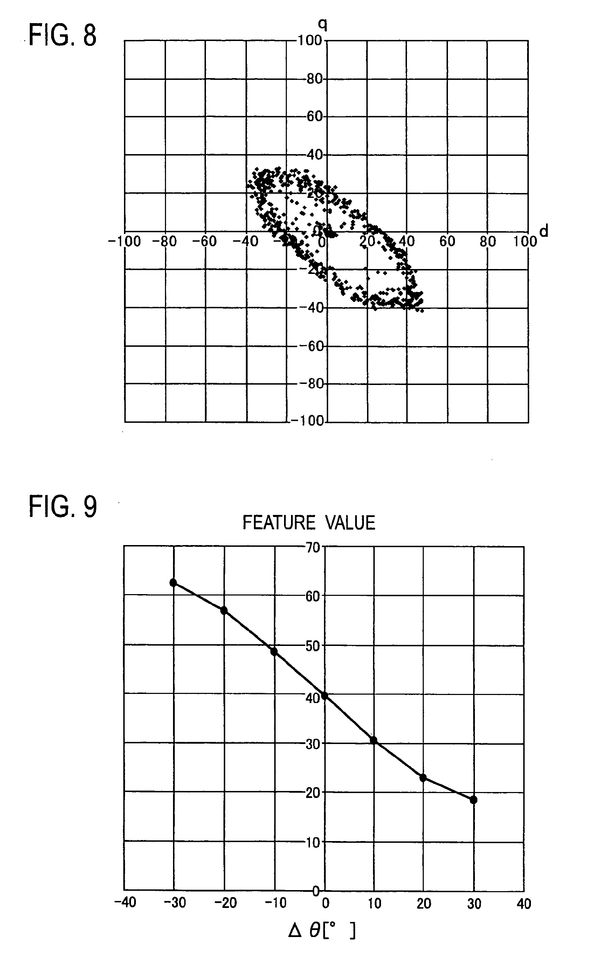

In a high-torque output state, drive currents passing through a stator induce an inductance saturation, to lower a saliency ratio observed on a rotor and achieve a saliency ratio of 1 in the worst case. If an estimation error Δθ occurs in a high-torque state that causes an inductance saturation, a current phase θi controlled by the γδ-axes coordinate system is turned by Δθ when seen from the dq-axes coordinate system. At this time, the current phase change changes the saturated state of the stator inductance, and therefore, the shape of a distribution of high-frequency components of current changes greatly changes according to Δθ as shown in Figs. 7 and 8. Even in such a high-torque state, the embodiment observes the shape of the distribution, relates the same to Δθ, and estimates a rotational phase angle. At this time, the high-frequency component distribution is affected by both the inductance of the stator itself and the rotor inductance. For example, a nearly elliptic distribution is related to a torque command and an estimated error and is stored. When a distribution is obtained, it is compared with the stored data, to estimate a rotational phase angle.

In this way, the sensorless control apparatus of a synchronous machine according to this embodiment estimates a phase angle of a rotor without a rotational phase angle sensor, thereby reducing the size and cost of the apparatus and realizing easy maintenance. In addition, the embodiment can stably estimate a rotational phase angle even in a high-torque state.

(Third embodiment)

A sensorless control apparatus of a synchronous machine according to a third embodiment of the present invention will be explained. A configuration of the sensorless control apparatus of this embodiment is common to that of the first and second embodiments shown in Fig. 3. A rotational phase angle estimate process carried out by the rotational phase angle estimate unit 08 of this embodiment differs from those of the first and second embodiments. The third embodiment is **characterized in that** it calculates a feature value in a spatial distribution of high-frequency components of current changes on the dq-axes coordinate system, and according to the feature value, estimates a rotational phase angle.

This embodiment selects as a feature value a maximum value from among components detected in a predetermined angular orientation from the $\gamma$-axis in a high-frequency component distribution of current changes plotted on the $\gamma\delta$-axes. A relationship between the selected feature value and an estimation error is on a characteristic curve shown in Fig. 9. This characteristic curve is linear and has an offset around an estimation error of zero. In Fig. 9, the predetermined angular orientation is set at 45° and calculations are made. The feature value is feedback-estimated so that it may converge to the error zero point, and a rotational phase angle is estimated.

This configuration can conduct the estimation according to a value obtained from simple comparison instead of complicated calculations. In Fig. 9, the predetermined angular orientation is about 45 degrees. Any feature value operation is allowable if it provides a feature value characteristic. For example, an area occupied by a distribution in a first quadrant on the $\gamma\delta$-axes may be a feature value. The area thus calculated can be adopted as a feature value that varies according to an estimation error.

As mentioned above, the sensorless control apparatus of a synchronous machine according to the third embodiment estimates a phase angle of a rotor without a rotational phase angle sensor, to thereby reduce the size and cost of the apparatus and realize easy maintenance. In addition, the embodiment can stably estimate a rotational phase angle without complicated calculations. Also, the embodiment calculates a feature value based on components detected in a predetermined angular orientation from the $\gamma$-axis, to simplify calculations necessary for estimating a rotational phase angle, shorten a calculation time, and save the performance of a processing unit.

(Fourth embodiment)

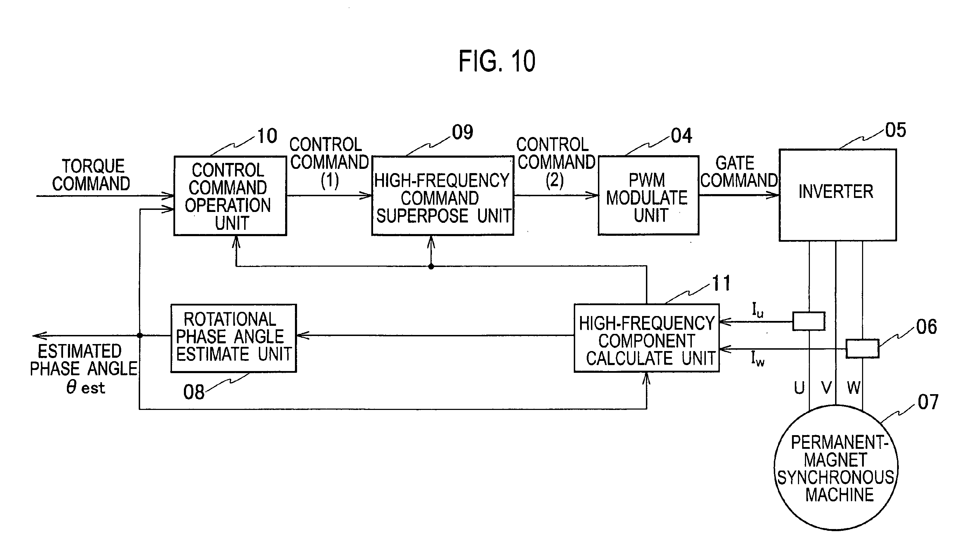

A sensorless control apparatus of a synchronous machine according to a fourth embodiment of the present invention will be explained with reference to Fig. 10. In this embodiment, the same elements as those of the first embodiment shown in Fig. 3 are represented with the same reference marks.

Compared with the first embodiment, the sensorless control apparatus of a synchronous machine of this embodiment is **characterized in that** it additionally has a high-frequency command superpose unit 09. The high-frequency command superpose unit 09 superposes, on voltage output from an inverter 05, a high-frequency command whose frequency is sufficiently higher than a basic frequency for operating a permanent-magnet synchronous machine 07, the high-frequency command being superposed on a command to the sensorless control apparatus. The high-frequency command may be a rotational high-frequency command. Also, the high-frequency command may generate high-frequency components of current changes that are significant in a predetermined angular orientation on the $\gamma\delta$ coordinate axes.

Next, operation of the sensorless control apparatus of the embodiment having the above-mentioned configuration will be explained. A principle of estimating a rotational phase angle is based on a temporal change rate of high-frequency currents. To obtain the change rate, changes in the high-frequency currents must precisely be observed. In a stopped state, a low-speed state, or a low-torque state, the inverter 05 outputs low voltages in response to a low-voltage command. A state that allows a calculation of a significant temporal change rate of high-frequency currents is usually a state in which voltage vectors output from the inverter 05 as a modulation result of a PWM modulate unit 04 are so-called non-zero voltage vectors other than V0 and V7. This is because the non-zero voltage vectors cause large current changes. The voltage vectors output from the inverter 05 are defined as shown in Fig. 2. In the stopped, low-speed, or low-torque state mentioned above, however, a time interval of a non-zero voltage vector becomes very short, and depending on a sampling period of an A/D converter, significant high-frequency current changes will not be observed. In this case, an error will easily occur in estimating a rotational phase angle.

For this, the fourth embodiment employs the high-frequency command superpose unit 09 to add a high-frequency command expressed with Math. 11 to a current command, thereby elongating a time interval of a non-zero voltage vector. The reason why the superposed command is a high-frequency command is to prevent the same from disturbing torque generated by a motor.

[Math. 11]

$$I_{\gamma hf}^{ref} = I_{hf} \sin\left(\varpi_{hf} t\right)$$

$$I_{\delta hf}^{ref} = I_{hf} \cos\left(\varpi_{hf} t\right)$$

Here, Ihf is a high-frequency command amplitude and ωhf is a high-frequency command angular velocity.

According to the embodiment, the high-frequency command can freely be selected within a range in which at least the above-mentioned characteristic is obtainable. Accordingly, it is not always necessary to follow Math. 11. However, superposing a rotational high-frequency command according to Math. 11 results in providing the above-mentioned characteristic and the below-mentioned effect. Namely, when the rotational phase angle estimate unit 08 conducts the rotational phase angle estimate technique by using the shape or area of a distribution of high-frequency components of current changes, providing the rotational high-frequency command results in making the distribution uniform on the γδ coordinate system, thereby precisely grasping the shape of the distribution and improving the accuracy of an estimated phase angle.

If the high-frequency command to be superposed is one that produces significant high-frequency components of current changes in a predetermined angular orientation on the γδ coordinate axes, the below-mentioned effect will be provided. Namely, when executing the third embodiment that estimates a rotational phase angle according to components in a predetermined angular orientation from the γ-axis among high-frequency components of current changes, significant high-frequency components will be obtained in the predetermined angular orientation, to improve a detection accuracy and a phase angle estimation accuracy.

The high-frequency command that generates significant high-frequency components of current changes in a predetermined angular orientation is determined according to the following expression:

[Math. 12]

$$I_{\gamma hf2}^{ref} = I_{hf} \cos\left(\phi\right)\sin\left(\varpi_{hf} t\right)$$

$$I_{\delta hf2}^{ref} = I_{hf} \sin\left(\phi\right)\sin\left(\varpi_{hf} t\right)$$

Here, φ is a predetermined angle.

As mentioned above, the sensorless control apparatus of a synchronous machine according to this embodiment estimates a phase angle of a rotor without a rotational phase angle sensor, to reduce the size and cost of the apparatus and realize easy maintenance. Even in a stopped, low-speed, or low-torque state, the embodiment can stably estimate a rotational phase angle.

**Claims**

1. A sensorless control apparatus of a synchronous machine, comprising:

   an inverter to invert DC power and AC power from one to another;
   the synchronous machine whose rotor has magnetic saliency and which receives power from the inverter and is driven thereby;
   a PWM modulate means to determine an output voltage of the inverter according to a command for controlling the synchronous machine;
   a current detect means to detect a current passed to the synchronous machine;
   a high-frequency component calculate means to calculate high-frequency components of current changes caused by voltages that have been determined by the PWM modulate means and have been output from the inverter; and
   a rotational phase angle estimate means to estimate a rotational phase angle of the synchronous machine according to a spatial distribution of the high-frequency components on rotating coordinate axes synchronized with the rotation of the synchronous machine.

2. The sensorless control apparatus of a synchronous machine as set forth in claim 1, wherein the rotational phase angle estimate means estimates a rotational phase angle according to a shape of the spatial distribution of the high-frequency components in a high torque output state that passes currents to saturate an inductance of the synchronous machine.

3. The sensorless control apparatus of a synchronous machine as set forth in claim 1 or 2, wherein the rotational phase angle estimate means estimates a rotational phase angle of the synchronous machine according to a feature value of the high-frequency components on the rotating coordinate axes.

4. The sensorless control apparatus of a synchronous machine as set forth in any one of claims 1 to 3, wherein the rotational phase angle estimate means estimates a rotational phase angle according to components in a predetermined angular orientation among the high-frequency components on the rotating coordinate axes.

5. The sensorless control apparatus of a synchronous machine as set forth in any one of claims 1 to 4, further comprising a high-frequency command superpose means to superpose a high-frequency command on the command for controlling the synchronous machine.

6. The sensorless control apparatus of a synchronous machine as set forth in claim 5, wherein the high-frequency command superpose means superposes a rotational high-frequency command.

7. The sensorless control apparatus of a synchronous machine as set forth in claim 5, wherein the high-frequency command superpose means superposes a high-frequency command that causes significant high-frequency-current changes in a predetermined angular orientation on the rotating coordinate axes.

# FIG. 1

# FIG. 2

## FIG. 3

CONTROL COMMAND

GATE COMMAND

TORQUE COMMAND → 10 CONTROL COMMAND OPERATION UNIT → 04 PWM MODULATE UNIT → 05 INVERTER

ROTATIONAL PHASE ANGLE ESTIMATE UNIT 08

ESTIMATED PHASE ANGLE θ est

11 HIGH-FREQUENCY COMPONENT CALCULATE UNIT

$I_u$

$I_w$

06

U V W

07 PERMANENT-MAGNET SYNCHRONOUS MACHINE

## FIG. 4

FIG. 5

FIG. 6

FIG. 7

FIG. 8

FIG. 9

FEATURE VALUE

$\Delta \theta [^\circ]$

# FIG. 10

TORQUE COMMAND →

CONTROL COMMAND OPERATION UNIT (10)

CONTROL COMMAND (1) →

HIGH-FREQUENCY COMMAND SUPERPOSE UNIT (09)

CONTROL COMMAND (2) →

PWM MODULATE UNIT (04)

GATE COMMAND →

INVERTER (05)

ROTATIONAL PHASE ANGLE ESTIMATE UNIT (08)

ESTIMATED PHASE ANGLE $\theta$ est

HIGH-FREQUENCY COMPONENT CALCULATE UNIT (11)

$I_u$

$I_w$

06

U V W

PERMANENT-MAGNET SYNCHRONOUS MACHINE (07)

EP 2 075 904 A1

<table>
<tr><td colspan="2" align="center">**INTERNATIONAL SEARCH REPORT**</td><td>International application No.<br>PCT/JP2007/061894</td></tr>
</table>

A.  CLASSIFICATION OF SUBJECT MATTER
*H02P6/18*(2006.01)i, *H02P6/10*(2006.01)i, *H02P21/00*(2006.01)i, *H02P27/04*
(2006.01)i

According to International Patent Classification (IPC) or to both national classification and IPC

B.  FIELDS SEARCHED

Minimum documentation searched (classification system followed by classification symbols)
H02P6/18, H02P6/10, H02P21/00, H02P27/04

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)
WPI

C.  DOCUMENTS CONSIDERED TO BE RELEVANT

| Category* | Citation of document, with indication, where appropriate, of the relevant passages | Relevant to claim No. |
|---|---|---|
| A | JP 2004-129430 A  (Nissan Motor Co., Ltd.),<br>22 April, 2004 (22.04.04),<br>Full text<br>(Family: none) | 1-7 |
| A | JP 2006-129574 A  (Toshiba Corp.),<br>18 May, 2006 (18.05.06),<br>Full text<br>& EP 1653599 A2          & US 2006/0097686 A1 | 1-7 |

☐  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>03 September, 2007 (03.09.07) | Date of mailing of the international search report<br>11 September, 2007 (11.09.07) |
|---|---|
| Name and mailing address of the ISA/<br>Japanese Patent Office | Authorized officer |
| Facsimile No. | Telephone No. |

Form PCT/ISA/210 (second sheet) (April 2005)

**EP 2 075 904 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3168967 B